(19) **Europäisches Patentamt / European Patent Office / Office européen des brevets**

(11) **EP 4 663 605 A1**

(12) **EUROPEAN PATENT APPLICATION**
published in accordance with Art. 153(4) EPC

(43) Date of publication:
**17.12.2025 Bulletin 2025/51**

(21) Application number: **24753392.0**

(22) Date of filing: **07.02.2024**

(51) International Patent Classification (IPC):
$C01G\ 9/08^{(2006.01)}$     $B82Y\ 30/00^{(2011.01)}$
$C01G\ 9/02^{(2006.01)}$     $C09K\ 9/00^{(2006.01)}$

(52) Cooperative Patent Classification (CPC):
**B82Y 30/00; C01G 9/02; C01G 9/08; C09K 9/00**

(86) International application number:
**PCT/JP2024/004149**

(87) International publication number:
**WO 2024/166949 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.02.2023 JP 2023017879**

(71) Applicant: **The Ritsumeikan Trust**
**Kyoto-shi, Kyoto 604-8520 (JP)**

(72) Inventors:
• **KOBAYASHI, Yoichi**
  **Kusatsu-shi, Shiga 525-8577 (JP)**
• **SANADA, Yusuke**
  **Kusatsu-shi, Shiga 525-8577 (JP)**
• **YAMAGUCHI, Mai**
  **Kusatsu-shi, Shiga 525-8577 (JP)**

(74) Representative: **Murgitroyd & Company**
**165-169 Scotland Street**
**Glasgow G5 8PL (GB)**

(54) **NANOPARTICLE, METHOD FOR GENERATING HYDRATED ELECTRON USING SAME, AND METHOD FOR DECOMPOSING HALOGEN-CONTAINING ORGANIC MATERIAL**

(57) Disclosed is a nanoparticle, comprising an organic ligand represented by the following Formula (2) on the surface of a particle represented by the following Formula (1): ZnX (1) [in Formula (1), X represents a Group 16 element], $-Y-R^{21}-R^{22}$ (2) [in Formula (2), Y is selected from OCO, $OSO_2$, OSO, and $SCS-N(R^{23})$; $R^{21}$ represents an organic group having 1 to 20 carbon atoms that is optionally substituted with SH or fluorine; $R^{22}$ represents H, F, COOH, or $NH_2$; and $R^{23}$ represents a monovalent organic group having 1 to 20 carbon atoms that is optionally substituted with SH or fluorine, with the proviso that cases where $R^{21}$ is $CH_2$ and $R^{22}$ is H or $NH_2$ are excluded].

EP 4 663 605 A1

## Description

### TECHNICAL FIELD

The present invention relates to: a nanoparticle; a method for generating hydrated electrons and a method for decomposing a halogen-containing organic material, which methods use the nanoparticle; and a photochromic material comprising the nanoparticle.

### BACKGROUND ART

Hydrated electrons have a high reduction potential (-2.9 V vs NHE (normal hydrogen electrode)) comparable to those of alkali metals, as well as a long lifespan (approximately 1 μs) sufficient to cause intermolecular reactions; therefore, in recent years, hydrated electrons have been drawing attention in various chemical reaction fields, comprising decomposition reactions of persistent (or not readily degradable) halogen-based substances and fixation of nitrogen or carbon dioxide.

However, the generation of hydrated electrons generally requires high-energy, large-sized, and very expensive light sources, such as a femtosecond pulsed laser and a vacuum UV light irradiation device (see Non-patent Document 1).

The generation of hydrated electrons using a relatively low-intensity light source has also been reported; however, the use of rare metal such as an iridium catalyst makes it difficult to put such a method into practical use as an industrial technology, considering its cost, sustainability, and the like (see Non-patent Document 2).

Therefore, a method by which hydrated electrons can be generated using a more versatile material is desired.

Such a more versatile material is of great interest both academically and industrially.

### PRIOR ART DOCUMENT

### PATENT DOCUMENT

Patent Document 1: WO2020/175245

### NON-PATENT DOCUMENTS

Non-patent Document 1: Chem. Rev. 2012, 112, 5553-5577
Non-patent Document 2: J. Am. Chem. Soc. 2019, 141, 5, 2122-2127

### SUMMARY OF THE INVENTION

### PROBLEMS TO BE SOLVED BY THE INVENTION

Incidentally, Patent Document 1 discloses a nanoparticle for photochromic materials, which is represented by a general formula ZnX (wherein, X represents a Group 16 element), to which a transition metal is doped and/or adsorbed, and which has an organic ligand represented by a general formula (2): -S-R-COOH. Patent Document 1 discloses that this nanoparticle is excellent as a photochromic material; however, it offers no teaching that the nanoparticle is capable of generating hydrated electrons or decomposing a fluorine-containing compound.

An object of the present invention is to provide: a method for generating hydrated electrons, by which hydrated electrons can be generated using a lower energy, smaller, and less expensive light source, and which uses a material that comprises no rare metal such as iridium and is not only lower in cost but also superior in sustainability (lower in country risk) and versatility; and the material superior in versatility. Another object of the present invention is to provide a method for decomposing a fluorine-containing compound by way of the method for generating hydrated electrons. Yet another object of the present invention is to provide a photochromic material and the like that comprise the material superior in versatility.

### SOLUTIONS TO THE PROBLEMS

The present inventors intensively studied to solve the above-described problems and consequently discovered that, despite that a specific nanoparticle comprises no rare metal such as iridium and is not only lower in cost but also superior in sustainability (lower in country risk) and versatility, the use of the specific nanoparticle enables to efficiently decompose a halogen-containing organic material using a lower energy, smaller, and less expensive light source. Based on this finding, the present inventors conducted further studies, thereby completing the present invention. The present inventors also discovered that the specific nanoparticle can be utilized as a photochromic material and has excellent versatility as well.

The present specification encompasses the following embodiments.

1. A nanoparticle, comprising an organic ligand represented by the following Formula (2) on the surface of a particle represented by the following Formula (1):

$$ZnX \qquad (1)$$

[in Formula (1), X represents a Group 16 element]

$$-Y-R^{21}-R^{22} \qquad (2)$$

[in Formula (2), Y is selected from OCO, $OSO_2$, OSO, and SCS-N($R^{23}$); $R^{21}$ represents an organic group having 1 to 20 carbon atoms that is optionally substituted with SH or fluorine; $R^{22}$ represents H, F, COOH, or $NH_2$; and $R^{23}$ represents a monovalent organic group having 1 to 20 carbon atoms that is optionally substituted with SH or fluorine, with the proviso that cases where $R^{21}$ is $CH_2$ and $R^{22}$ is H or $NH_2$ are excluded].

2. The nanoparticle according to the above 1, wherein Formula (2) is selected from the following:

$$-OCO-CH(CH_3)-NH_2,$$

$$-OCO-CH(CH_2SH)-NH_2,$$

$$-OCO-C_6H_5,$$

$$-OCO-C_2H_5,$$

$$-OCO-CF_3,$$

$$-OSO_2-CF_3,$$

$$-OSO-CF_3,$$

and

$$-SCS-N(C_2H_5)_2.$$

3. A nanoparticle for a photochromic material, generation of hydrated electrons, or decomposition of a halogen-containing organic material, the nanoparticle comprising a nanoparticle that has an organic ligand represented by the following Formula (2') on the surface of a particle represented by the following Formula (1'):

$$ZnX \qquad (1')$$

[in Formula (1'), X represents a Group 16 element]

$$- Y-R^{21}-R^{22} \qquad (2')$$

[in Formula (2'), Y is selected from OCO, $OSO_2$, OSO, and SCS-N($R^{23}$); $R^{21}$ represents an organic group having 1 to 20 carbon atoms that is optionally substituted with SH or fluorine; $R^{22}$ represents H, F, COOH, or $NH_2$; and $R^{23}$ represents a monovalent organic group having 1 to 20 carbon atoms that is optionally substituted with SH or fluorine].

4. The nanoparticle according to the above 3, wherein Formula (2) is selected from the following:

$$-OCO-CH_3,$$

$$-OCO-CH_2-NH_2,$$

$$-OCO-CH(CH_3)-NH_2,$$

-OCO-CH(CH$_2$SH)-NH$_2$,

-OCO-C$_6$H$_5$,

-OCO-C$_2$H$_5$,

-OCO-CF$_3$,

-OSO$_2$-CF$_3$,

-OSO-CF$_3$,

and

-SCS-N(C$_2$H$_5$)$_2$.

5. The nanoparticle according to the above 1 or 2, wherein $R^{21}$ represents an organic group having 1 to 20 carbon atoms that is optionally substituted with SH or fluorine, and $R^{22}$ is H or COOH, with the proviso that cases where $R^{21}$ is CH$_2$ and $R^{22}$ is H are excluded.

6. The nanoparticle according to the above 3 or 4, wherein $R^{21}$ represents an organic group having 1 to 20 carbon atoms that is optionally substituted with SH or fluorine, and $R^{22}$ is H or COOH.

7. The nanoparticle according to any one of the above 1 to 6, wherein X is at least one selected from O, S, Se, and Te.

8. The nanoparticle according to any one of the above 1 to 7, wherein a transition metal is doped and/or adsorbed to the particle.

9. The nanoparticle according to any one of the above 1 to 8, having an average particle size of 1 nm to 100 nm.

10. A nanoparticle for a photochromic material, generation of hydrated electrons, or decomposition of a halogen-containing organic material, the nanoparticle comprising the nanoparticle according to any one of the above 1, 2, and 5.

11. A nanoparticle aqueous dispersion, comprising the nanoparticle according to any one of the above 1 to 10 dispersed in water.

12. A nanoparticle dispersion, comprising the nanoparticle according to any one of the above 1 to 10 dispersed in a dispersion medium,

wherein the content of the nanoparticle is 0.005 to 30% by mass based on 100% by mass of the dispersion.

13. The nanoparticle dispersion according to the above 11 or 12, having a temperature of 0 to 70°C.

14. A method for generating hydrated electrons, the method using the nanoparticle for generation of hydrated electrons according to the above 3, 4, 6 or 10.

15. The method for generating hydrated electrons according to the above 14, the method comprising irradiating the nanoparticle for generation of hydrated electrons according to the above 3, 4, 6 or 10 with visible light or UV light.

16. A method for decomposing a halogen-containing organic material, the method using the nanoparticle for decomposition of a halogen-containing organic material according to the above 3, 4, 6 or 14.

17. The method for decomposing a halogen-containing organic material according to the above 14, the method comprising irradiating the nanoparticle for decomposition of a halogen-containing organic material according to the above 3, 4, 6 or 14 with visible light or UV light to cleave halogen-carbon bonds of the halogen-containing organic material.

EFFECTS OF THE INVENTION

The nanoparticle according to one embodiment of the present invention comprises no rare metal such as iridium and is not only lower in cost but also superior in sustainability (lower in country risk), and the use of this specific nanoparticle enables to generate hydrated electrons using a lower energy, smaller, and less expensive light source. The nanoparticle according to one embodiment of the present invention can be utilized as a photochromic material and has excellent versatility as well.

BRIEF DESCRIPTION OF THE DRAWINGS

[FIG. 1] FIG. 1 shows the XRD measurement result of the acetic acid-coordinated Cu-doped ZnS nanocrystal of Example 1.

[FIG. 2] FIG. 2 shows the FTIR measurement result of the acetic acid-coordinated Cu-doped ZnS nanocrystal of Example 1.

[FIG. 3] FIG. 3 shows the results of measuring $^{19}$FNMR before and after UV light irradiation in a photolysis reaction using the acetic acid-coordinated Cu-doped ZnS nanocrystal of Example 1.

[FIG. 4] FIG. 4 shows the XRD measurement result of the acetic acid-coordinated ZnS nanocrystal of Example 2.

[FIG. 5] FIG. 5 shows the FTIR measurement result of the acetic acid-coordinated ZnS nanocrystal of Example 2.

[FIG. 6] FIG. 6 shows the results of measuring $^{19}$FNMR before and after UV light irradiation in a photolysis reaction using the acetic acid-coordinated ZnS nanocrystal of Example 2.

[FIG. 7] FIG. 7 shows the XRD measurement result of the acetic acid-coordinated ZnO nanocrystal of Example 3.

[FIG. 8] FIG. 8 shows the FTIR measurement result of the acetic acid-coordinated ZnO nanocrystal of Example 3.

[FIG. 9] FIG. 9 shows the results of measuring $^{19}$FNMR before and after UV light irradiation in a photolysis reaction using the acetic acid-coordinated ZnO nanocrystal of Example 3.

[FIG. 10] FIG. 10 shows the XRD measurement result of the MPA-coordinated Cu-doped ZnS nanocrystal of Comparative Example 1.

[FIG. 11] FIG. 11 shows the FTIR measurement result of the MPA-coordinated Cu-doped ZnS nanocrystal of Comparative Example 1.

[FIG. 12] FIG. 12 shows the results of measuring $^{19}$FNMR before and after UV light irradiation in a photolysis reaction using the MPA-coordinated Cu-doped ZnS nanocrystal of Comparative Example 1.

[FIG. 13] FIG. 13 shows the XRD measurement result of the MPA-coordinated ZnS nanocrystal of Comparative Example 2.

[FIG. 14] FIG. 14 shows the FTIR measurement result of the MPA-coordinated ZnS nanocrystal of Comparative Example 2.

[FIG. 15] FIG. 15 shows the results of measuring $^{19}$FNMR before and after UV light irradiation in a photolysis reaction using the MPA-coordinated ZnS nanocrystal of Comparative Example 2.

[FIG. 16] FIG. 16 shows the XRD measurement result of the MPA-coordinated ZnO nanocrystal of Comparative Example 3.

[FIG. 17] FIG. 17 shows the FTIR measurement result of the MPA-coordinated ZnO nanocrystal of Comparative Example 3.

[FIG. 18] FIG. 18 shows the results of measuring $^{19}$FNMR before and after UV light irradiation in a photolysis reaction using the MPA-coordinated ZnO nanocrystal of Comparative Example 3.

DETAILED DESCRIPTION

In one aspect, the present invention provides a nanoparticle comprising a particle that is represented by the following Formula (1) and has an organic ligand represented by the following Formula (2) on its surface:

$$ZnX \qquad (1)$$

[in Formula (1), X represents a Group 16 element]

$$-Y-R^{21}-R^{22} \qquad (2)$$

[in Formula (2), Y is selected from OCO, $OSO_2$, OSO, and SCS-N($R^{23}$); $R^{21}$ represents an organic group having 1 to 20 carbon atoms that is optionally substituted with SH or fluorine; $R^{22}$ represents H, F, COOH, or $NH_2$; and $R^{23}$ represents a monovalent organic group having 1 to 20 carbon atoms that is optionally substituted with SH or fluorine, with the proviso that cases where $R^{21}$ is $CH_2$ and $R^{22}$ is H or $NH_2$ are excluded].

This nanoparticle can be not only preferably used for the generation of hydrated electrons and the decomposition of a halogen-containing organic material, but also used as a photochromic material.

The nanoparticle according to one embodiment of the present invention is represented by the following Formula (1):

$$ZnX \qquad (1)$$

[in Formula (1), X represents a Group 16 element].

In Formula (1), X represents a Group 16 element. Specifically, at least one selected from O, S, Se, and Te can be exemplified as X, and X is preferably at least one selected from O, S, Se, and Te. O and S are more preferred because they are abundant resources on Earth and have higher chemical stability. X may be used singly, or in combination of two or more kinds thereof.

A transition metal may be doped and/or adsorbed to the nanoparticle according to the above-described embodiment of the present invention. When the nanoparticle is doped with a transition metal, Zn in the particle core represented by ZnX is partially replaced with the transition metal. When a transition metal is adsorbed to the nanoparticle, the transition metal is adsorbed on the surface of the particle core represented by ZnX. A transition metal may be doped or adsorbed to the nanoparticle, or may be doped and adsorbed to the nanoparticle.

The transition metal is not particularly limited as long as the nanoparticle intended by the present invention can be obtained, and examples thereof comprise manganese, cobalt, nickel, iron, chromium, copper, aluminum, molybdenum, vanadium, titanium, zirconium, niobium, silver, bismuth, and indium. As the transition metal, copper and manganese are preferred, and copper is more preferred, because these transition metals can be relatively easily doped into a zinc compound and are likely to trap holes. The transition metal may be used singly, or in combination of two or more kinds thereof.

The doping rate of the transition metal is preferably 0.01% by mole or more, more preferably 0.1% by mole or more, still more preferably 0.5% by mole or more, yet still more preferably 1.0% by mole or more, taking a total number of moles of Zn element and transition metal element as 100% by mole.

The doping rate of the transition metal is preferably 30.0% by mole or less, more preferably 20.0% by mole or less, still more preferably 15.0% by mole or less, taking a total number of moles of Zn element and transition metal element as 100% by mole.

When the doping rate of the transition metal is in the above-described range, the generation of hydrated electrons, the decomposition of a fluorine-containing material, and the like can be performed more efficiently.

The doping rate can be determined by performing X-ray fluorescence analysis of the nanoparticle.

The adsorption amount of the transition metal is preferably 0.01% by mole or more, more preferably 0.1% by mole or more, still more preferably 0.3% by mole or more, yet still more preferably 0.5% by mole or more, taking a total number of moles of Zn element as 100% by mole.

The adsorption amount of the transition metal is preferably 30.0% by mole or less, more preferably 20.0% by mole or less, still more preferably 15.0% by mole or less, taking a total number of moles of Zn element as 100% by mole.

When the adsorption amount of the transition metal is in the above-described range, the generation of hydrated electrons, the decomposition of a fluorine-containing material, and the like can be performed more efficiently.

The adsorption of the transition metal is not particularly limited as long as the nanoparticle intended by the present invention can be obtained; however, the transition metal may be adsorbed to the surface of the core of the particle represented by ZnX, and the transition metal is preferably physically adsorbed. The form of the physical adsorption is not necessarily clear; however, one example thereof is a form in which the transition metal is adsorbed to the surface of the core of the particle represented by ZnX by means of an electrical action such as van der Waals force.

The nanoparticle according to the above-described embodiment of the present invention comprises a particle that has an organic ligand represented by the following Formula (2) on its surface:

$$-Y-R^{21}-R^{22} \qquad (2)$$

[in Formula (2), Y is selected from OCO, $OSO_2$, OSO, and SCS-N($R^{23}$); $R^{21}$ represents an organic group having 1 to 20 carbon atoms that is optionally substituted with SH or fluorine; $R^{22}$ represents H, F, COOH, or $NH_2$; and $R^{23}$ represents a monovalent organic group having 1 to 20 carbon atoms that is optionally substituted with SH or fluorine, with the proviso that cases where $R^{21}$ is $CH_2$ and $R^{22}$ is H or $NH_2$ are excluded].

In Formula (2), Y is selected from OCO (carboxylate), $OSO_2$ (sulfonate), OSO (sulfinate), and SCS-N($R^{23}$) (dithiocarbamate).

In Formula (2), $R^{21}$ represents an organic group having 1 to 20 carbon atoms that is optionally substituted with SH or fluorine. The organic group having 1 to 20 carbon atoms is not limited as long as the nanoparticle intended by the present invention can be obtained, and may be, for example, an aliphatic hydrocarbon group, an aromatic hydrocarbon group, or an alicyclic hydrocarbon group.

Examples of the aliphatic hydrocarbon group comprise linear hydrocarbon groups, branched hydrocarbon groups, and alicyclic hydrocarbon groups. Linear hydrocarbon groups, branched hydrocarbon groups, and aromatic hydrocarbon groups are more preferred because these groups enable the more efficient performance of the generation of hydrated electrons, the decomposition of a fluorine-containing material, and the like.

The organic group having 1 to 20 carbon atoms is optionally substituted with SH or fluorine. The number of substitutions with SH or fluorine may be at least one, or one to three, and it is preferably one or two. As long as the nanoparticle intended by the present invention can be obtained, $R^{21}$ may also comprise elements such as nitrogen, sulfur, and oxygen, in addition to nitrogen or oxygen comprised in SH or fluorine.

The number of carbon atoms in the organic group of $R^{21}$ is preferably 1 or more. The number of carbon atoms in the organic group of $R^{21}$ is preferably 20 or less, more preferably 12 or less.

When the organic group of $R^{21}$ is an aliphatic hydrocarbon group, the number of carbon atoms in the organic group of $R^{21}$ is preferably 10 or less, more preferably 6 or less, still more preferably 1 to 3.

When the organic group of $R^{21}$ is a carbocyclic aromatic group, the number of carbon atoms in the organic group of $R^{21}$ is preferably 10 or less, more preferably 6 to 10.

The number of carbon atoms in the organic group of $R^{21}$ is more preferably in the above-described range because this enables to more efficiently perform the generation of hydrated electrons, the decomposition of a fluorine-containing material, and the like.

In Formula (2), $R^{22}$ represents H, F, COOH, or $NH_2$. A combination of $R^{22}$ and $R^{21}$ is not limited as long as the nanoparticle intended by the present invention can be obtained.

However, those cases where $R^{21}$ is $CH_2$ and $R^{22}$ is H or $NH_2$ are excluded. In other words, it is excluded that the organic ligand is an acetic acid ester ($CH_3COO-$) (or an acetic acid ester ($CH_3COO-$) is excluded from the organic ligand). Further, it is excluded that the organic ligand is a glycine ester ($H_2NCH_2COO-$) (or a glycine ester ($H_2NCH_2COO-$ is excluded from the organic ligand).

The combination of $R^{21}$ and $R^{22}$ represents an organic group having 1 to 20 carbon atoms that is optionally substituted with SH or fluorine, and $R^{22}$ is preferably H, COOH, F, or $CH_3$, more preferably H or COOH.

In Formula (2), when Y is $SCS-N(R^{23})$ (dithiocarbamate), $R^{23}$ represents a monovalent organic group having 1 to 20 carbon atoms that is optionally substituted with SH or fluorine. The number of substitutions with SH or fluorine may be at least one, one to three, or one or two.

The monovalent organic group having 1 to 20 carbon atoms, which is represented by $R^{23}$, is not limited as long as the nanoparticle intended by the present invention can be obtained, and may be, for example, an aliphatic hydrocarbon group, an aromatic hydrocarbon group, or an alicyclic hydrocarbon group.

Examples of the aliphatic hydrocarbon group comprise linear hydrocarbon groups, branched hydrocarbon groups, and alicyclic hydrocarbon groups. Linear hydrocarbon groups, branched hydrocarbon groups, and aromatic hydrocarbon groups are more preferred because these groups enable to more efficiently perform the generation of hydrated electrons, the decomposition of a fluorine-containing material, and the like.

The number of carbon atoms in the monovalent organic group of $R^{23}$ is preferably 1 or more. The number of carbon atoms in the monovalent organic group of $R^{23}$ is preferably 20 or less, more preferably 12 or less.

When the monovalent organic group of $R^{23}$ is an aliphatic hydrocarbon group, the number of carbon atoms in the monovalent organic group of $R^{23}$ is preferably 10 or less, more preferably 6 or less, still more preferably 1 to 3.

When the monovalent organic group of $R^{23}$ is a carbocyclic aromatic group, the number of carbon atoms in the monovalent organic group of $R^{23}$ is preferably 10 or less, more preferably 6 to 10.

The number of carbon atoms in the monovalent organic group of $R^{23}$ is preferably in the above-described range because this enables more efficient performance of the generation of hydrated electrons, the decomposition of a fluorine-containing material, and the like.

In Formula (2), when Y is $SCS-N(R^{23})$ (dithiocarbamate), $R^{22}$ is preferably H.

The organic ligand represented by Formula (2) is more preferably represented by the following formula:

$-OCO-CH(CH_3)-NH_2$,

$-OCO-CH(CH_2SH)-NH_2$,

$-OCO-C_6H_5$,

$-OCO-C_2H_5$,

$-OCO-CF_3$,

$-OSO_2-CF_3$,

$-OSO-CF_3$,

or

$-SCS-N(C_2H_5)_2$.

In another aspect, the present invention provides a nanoparticle for a photochromic material, generation of hydrated electrons, or decomposition of a halogen-containing organic material, the nanoparticle comprising a nanoparticle that has an organic ligand represented by the following Formula (2') on the surface of a particle represented by the following Formula (1'):

$$ZnX \qquad (1')$$

[in Formula (1'), X represents a Group 16 element]

$$-Y-R^{21}-R^{22} \qquad (2')$$

[in Formula (2'), Y is selected from OCO, OSO$_2$, OSO, and SCS-N(R$^{23}$); R$^{21}$ represents an organic group having 1 to 20 carbon atoms that is optionally substituted with SH or fluorine; R$^{22}$ represents H, F, COOH, or NH$_2$; and R$^{23}$ represents a monovalent organic group having 1 to 20 carbon atoms that is optionally substituted with SH or fluorine].

X in Formula (1') is the same as the aforementioned X in Formula (1), and reference can be made to the description of X in Formula (1).

Further, a transition metal may be doped and/or adsorbed to the nanoparticle according to another embodiment of the present invention. This transition metal is the same as the aforementioned transition metal relating to Formula (1), and reference can be made to the above description regarding the transition metal.

Y in Formula (2') is the same as the aforementioned Y in Formula (2), and reference can be made to the description of Y in Formula (2).

R$^{21}$ and R$^{22}$ in Formula (2') are the same as the aforementioned R$^{21}$ and R$^{22}$ in Formula (2), and reference can be made to the description regarding R$^{21}$ and R$^{22}$ in Formula (2).

However, although those cases where R$^{21}$ is CH$_2$ and R$^{22}$ is H or NH$_2$ are excluded in Formula (2), such cases are not excluded in Formula (2'). In other words, acetic acid esters and glycine esters are also comprised in Formula (2').

R$^{23}$ in Formula (2') in which Y is SCS-N(R$^{23}$) is the same as aforementioned R$^{23}$ in Formula (2) in which Y is SCS-N(R$^{23}$), and reference can be made to the description regarding R$^{23}$ in Formula (2).

The organic ligand represented by Formula (2') is more preferably represented by the following formula:

-OCO-CH$_3$,

-OCO-CH$_2$-NH$_2$,

-OCO-CH(CH$_3$)-NH$_2$,

-OCO-CH(CH$_2$SH)-NH$_2$,

-OCO-C$_6$H$_5$,

-OCO-C$_2$H$_5$,

-OCO-CF$_3$,

-OSO$_2$-CF$_3$,

-OSO-CF$_3$,

or

-SCS-N(C$_2$H$_5$)$_2$.

The average particle size of the nanoparticle according to one embodiment of the present invention is preferably 1 nm or more, more preferably 2 nm or more, still more preferably 3 nm or more. The average particle size of the nanoparticle according to one embodiment of the present invention is preferably 100 nm or less, more preferably 60 nm or less, still more preferably 30 nm or less, yet still more preferably 10 nm or less. The average particle size of the nanoparticle is most preferably 3 nm to 10 nm. When the average particle size of the nanoparticle is in the above-described range, Auger recombination, which is a nonlinear reaction required for the generation of hydrated electrons, can take place more efficiently.

In the present specification, the above-described average particle size can be calculated based on the linewidth of a scattering peak that is measured using a sample horizontal-type multi-purpose X-ray diffractometer (e.g., ULTIMA IV manufactured by Rigaku Corporation).

One embodiment of the present invention provides a nanoparticle dispersion in which the above-described nanoparticle is dispersed in a dispersion medium. For utilization of the nanoparticle according to one embodiment of the present invention, it is convenient to produce and use a dispersion in which the nanoparticle is dispersed in a dispersion medium. The dispersion medium is not particularly limited; however, for example, water can be used, and an aqueous dispersion is preferred. It is noted here that, in the present specification, "disperse" may be "suspend", and a "dispersion" may be a "suspension."

The content of the nanoparticle in the nanoparticle dispersion may be, for example, 0.005 to 30% by mass, and it is preferably 0.01 to 30% by mass, 0.02 to 30% by mass, or 0.05 to 30% by mass, and may be 0.1 to 30% by mass, 0.3 to 20% by mass, 0.5 to 10% by mass, or 1.0 to 7.0% by mass, based on 100% by mass of the dispersion. The upper limit of the content of the nanoparticle may be 20% by mass, 10% by mass, 7.0% by mass, or 5.0% by mass. Meanwhile, the lower limit of the content of the nanoparticle may be 0.3% by mass, 0.5% by mass, or 1.0% by mass. When the content of the nanoparticle is in the above-described range, the generation of hydrated electrons, the decomposition of a fluorine-containing material, and the like can be performed more efficiently.

The temperature of the nanoparticle dispersion is not particularly limited; however, it may be, for example, 0 to 70°C, and it is preferably 0 to 60°C, more preferably 0 to 50°C, still more preferably 0 to 40°C, yet still more preferably 0 to 30°C. The lower limit of this temperature may be 10°C. When the temperature of the nanoparticle dispersion is in the above-described range, the nanoparticle can be dispersed more uniformly, so that the generation of hydrated electrons, the decomposition of a fluorine-containing material, and the like can be performed more efficiently.

The nanoparticle according to one embodiment of the present invention can be used for generating hydrated electrons, and the present invention can provide a method for generating hydrated electrons using such a nanoparticle for generation of hydrated electrons.

The present invention can provide a method for generating hydrated electrons, which method comprises irradiating the above-described nanoparticle for generation of hydrated electrons with visible light or UV light.

The nanoparticle according to one embodiment of the present invention can be used for decomposing a halogen-containing organic material, and the present invention can provide a method for decomposing a halogen-containing organic material using such a nanoparticle for decomposition of a halogen-containing organic material.

The present invention can provide a method for decomposing a halogen-containing organic material, which method comprises irradiating the above-described nanoparticle for decomposition of a halogen-containing organic material with visible light or UV light to cleave halogen-carbon bonds of the halogen-containing organic material.

The nanoparticle according to one embodiment of the present invention can be used for producing a photochromic material. By using the nanoparticle according to one embodiment of the present invention, a photochromic material having a short photochromic reaction time can be produced. The nanoparticle according to one embodiment of the present invention can be suitably used for photochromic materials.

EXAMPLES

The present invention will now be described more concretely and in more detail by way of Examples and Comparative Examples; however, the below-described Examples are merely embodiments of the present invention, and the present invention is not limited by the below-described Examples at any rate.

In the description of Examples, unless otherwise specified, those parts where a solvent is not taken into account are based on parts by mass or % by weight.

Example 1: Synthesis of Acetic Acid-Coordinated Cu-Doped ZnS Nanocrystal and Decomposition of PFOS

(Synthesis)

In a 200-mL three-necked flask, zinc acetate dihydrate ($Zn(CH_3COO)_2 \cdot 2H_2O$, 543 mg, 2.5 mmol) and copper (II) acetylacetonate ($Cu(C_5H_7O_2)_2$, 7.3 mg, 0.028 mmol) were placed and dissolved in 100 mL of Milli-Q water, followed by 30-minute nitrogen bubbling. Sodium sulfide ($Na_2S$, 273 mg, 1.14 mmol) dissolved in 2.5 mL of Milli-Q water was added with vigorous stirring, and the resultant was continuously stirred for 15 minutes and subsequently heated to reflux at 100°C for 24 hours. The thus obtained solution was precipitated with ethanol (solution:ethanol = 4:1) and then centrifuged (9,000 rpm, 10 minutes), and the resulting precipitate was vacuum-dried at 40°C.

(Structural Identification)

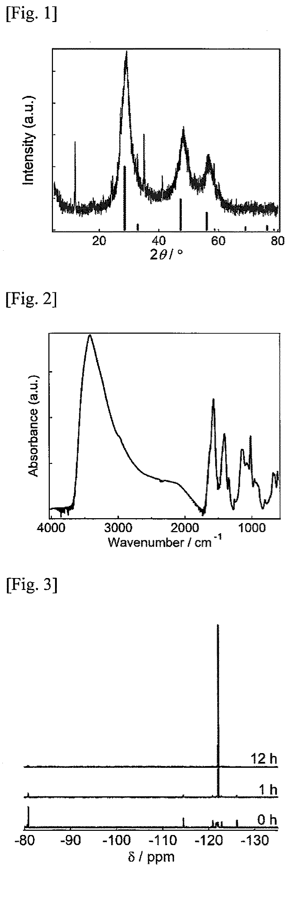

FIG. 1 shows the powder X-ray diffraction (XRD) measurement result of the thus synthesized acetic acid-coordinated Cu-doped ZnS nanocrystal. The synthesized nanocrystal was found to exhibit a zinc blende-type crystal structure (JCPDS: 01-073-2568).

The particle diameter (D) of the nanocrystal can be calculated by the Scherrer formula shown in the following Equation (1):

$$D = K\lambda/(\beta\cos\theta) \quad (1)$$

wherein, K represents the Scherrer constant (0.94); $\lambda$ represents the X-ray wavelength (0.154 nm); $\beta$ represents a peak full width at half maximum; and $\theta$ represents a Bragg angle. The particle diameter of the acetic acid-coordinated Cu-doped ZnS nanocrystal was calculated to be 3.56 nm.

X-ray fluorescence (XRF) measurement was performed to examine the elements and their concentrations in a sample. It was found that, in the sample of the acetic acid-coordinated Cu-doped ZnS nanocrystal of Example 1, 3.8% by mole of Cu existed in terms of mole ratio with respect to Zn.

In order to check the organic molecule coordination state on the surface of the acetic acid-coordinated Cu-doped ZnS nanocrystal of Example 1, Fourier transform infrared (FTIR) absorption spectrum was measured by a transmission method using a KBr plate. The result thereof is shown in FIG. 2. Symmetric and asymmetric stretching vibrations of COO⁻ were observed at 1,567 $cm^{-1}$ and 1,409 $cm^{-1}$. This suggests that acetic acid is coordinated to the nanocrystal surface. In addition, the broad band from 3,000 to 3,600 $cm^{-1}$, which is derived from O-H stretching vibration, suggests hydrogen bonding of adsorbed water existing on the nanocrystal surface.

(Photolysis Reaction of PFOS)

The acetic acid-coordinated Cu-doped ZnS nanocrystal of Example 1 was weighed in 5.0 mg and added to 3 mL of heavy water. To the resulting solution, triethanolamine (TEOA, 50.8 mg, 0.34 mmol) and perfluorooctanesulfonic acid (PFOS, 1.7 mg, $3.2 \times 10^{-3}$ mmol) were added to prepare a solution (PFOS + nanoparticle preparation solution).

As NMR standard substances, 4-(trifluoromethyl)benzoic acid (2.3 mg, $1.2 \times 10^{-2}$ mmol) and TEOA (40.7 mg, 0.27 mmol) were added to 3 mL of heavy water to prepare a standard solution (NMR standard solution).

The PFOS + nanoparticle preparation solution and the NMR standard solution were taken in an amount of 0.4 mL and 0.1 mL, respectively, and transferred to an NMR sample tube to perform $^{19}F$NMR measurement (0 h).

The PFOS + nanoparticle preparation solution was transferred to a 1-cm cell and irradiated with UV light (365 nm, 469 mW) for 1 hour and 12 hours. This PFOS + nanoparticle preparation solution and the NMR standard solution were taken in an amount of 0.4 mL and 0.1 mL, respectively, and transferred to an NMR sample tube to perform $^{19}F$NMR measurement (1 h and 12 h). FIG. 3 shows the results of measuring $^{19}F$NMR before the UV light irradiation (0 h) and after the UV light irradiation (1 h and 12 h). As a result of calculating the C-F bond dissociation rate (not the PFOS decomposition rate but the C-F bond dissociation rate) from the integral value of fluoride ion using the peak integral value at 0 h as a reference value, the C-F bond dissociation rate was found to be 33% at 1 h and 85% at 12 h.

Example 2: Synthesis of Acetic Acid-Coordinated ZnS Nanocrystal and Decomposition of PFOS

(Synthesis)

In a 500-mL three-necked flask, zinc acetate dihydrate ($Zn(CH_3COO)_2 \cdot 2H_2O$, 1,050.8 mg, 4.78 mmol) was placed and dissolved in 200 mL of Milli-Q water, followed by 30-minute nitrogen bubbling. Sodium sulfide ($Na_2S$, 546 mg, 2.28 mmol) dissolved in 5.0 mL of Milli-Q water was added with vigorous stirring, and the resultant was continuously stirred for 15 minutes and subsequently heated to reflux at 100°C for 24 hours. The thus obtained solution was precipitated with ethanol (solution: ethanol = 4:1) and then centrifuged (9,000 rpm, 10 minutes), and the resulting precipitate was vacuum-dried at 40°C.

(Structural Identification)

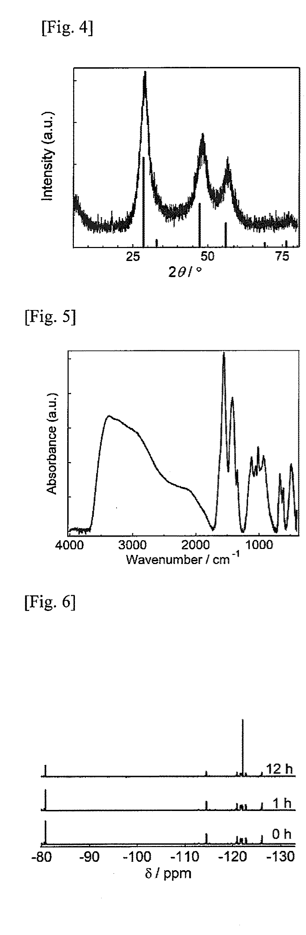

FIG. 4 shows the powder X-ray diffraction (XRD) measurement result of the thus synthesized acetic acid-coordinated ZnS nanocrystal of Example 2. The synthesized nanocrystal was found to exhibit a zinc blende-type crystal structure (JCPDS: 01-073-2568).

The particle diameter of the acetic acid-coordinated ZnS nanocrystal of Example 2 was calculated to be 3.43 nm by the same method as in Example 1.

X-ray fluorescence (XRF) measurement of the acetic acid-coordinated ZnS nanocrystal of Example 2 was performed in the same manner as in Example 1. In the acetic acid-coordinated ZnS nanocrystal of Example 2, Cu was not detected.

The FTIR absorption spectrum of the acetic acid-coordinated ZnS nanocrystal of Example 2 was measured in the same manner as in Example 1. The result thereof is shown in FIG. 5. Symmetric and asymmetric stretching vibrations of COO- were observed at 1,557 cm-1 and 1,417 cm-1. This suggests that acetic acid is coordinated to the nanocrystal surface. In addition, the broad band from 3,000 to 3,600 cm-1, which is derived from O-H stretching vibration, suggests hydrogen bonding of adsorbed water existing on the nanocrystal surface.

(Photolysis Reaction of PFOS)

The $^{19}$FNMR of the acetic acid-coordinated ZnS nanoparticle of Example 2 was measured before UV light irradiation (0 h) and after UV light irradiation (1 h and 12 h) in the same manner as in Example 1. The results thereof are shown in FIG. 6. As a result of calculating the C-F bond dissociation rate (not the PFOS decomposition rate but the C-F bond dissociation rate) from the integral value of fluoride ion using the peak integral value at 0 h as a reference value, the C-F bond dissociation rate was found to be 4% at 1 h and 14% at 12 h.

Example 3: Synthesis of Acetic Acid-Coordinated ZnO Nanocrystal and Decomposition of PFOS

(Synthesis)

In a 100-mL three-necked flask, zinc acetate dihydrate ($Zn(CH_3COO)_2 \cdot 2H_2O$, 1,023 mg, 4.66 mmol) was placed and dissolved in 45 mL of methanol, followed by refluxing at 60°C with stirring. Subsequently, a KOH methanol solution (511.6 mg (9.12 mmol)/22 mL) was added over a period of 5 minutes, and the resulting solution was stirred for 2 hours. Thereafter, heating and stirring were stopped, and the solution was left to stand for 3 hours. This solution was centrifuged (6,000 rpm, 3 minutes), and the resulting precipitate was vacuum-dried for one day.

(Structural Identification)

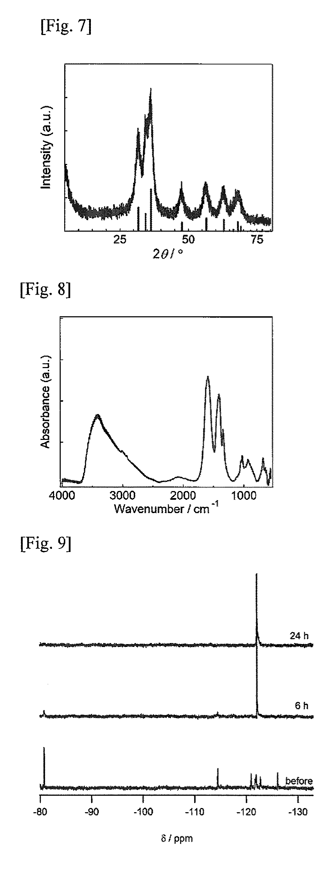

FIG. 7 shows the powder X-ray diffraction (XRD) measurement result of the thus synthesized acetic acid-coordinated ZnO nanocrystal of Example 3. The synthesized nanocrystal was found to be a wurtzite-type crystal. Using the Scherrer formula for the peak at 47°, the particle size of the ZnO nanocrystal was calculated to be 5.74 nm.
FIG. 8 shows the FTIR measurement result of the acetic acid-coordinated ZnO nanocrystal of Example 3. From FIG. 8, C-H stretching vibration is observed at 2,998 and 2,996 cm-1, and symmetric and asymmetric stretching vibrations of COO- are observed at 1,589 and 1,406 cm-1. Therefore, it is believed that acetic acid was coordinated.

(Photolysis Reaction of PFOS)

The acetic acid-coordinated ZnO nanocrystal of Example 3 was weighed in 14.9 mg and added to 4 mL of heavy water. To the resulting solution, triethanolamine (TEOA, 60.5 mg, 0.41 mmol) and PFOS (1.6 mg, $3.0 \times 10^{-3}$ mmol) were added to prepare a solution (PFOS + nanoparticle preparation solution).
As NMR standard substances, 4-(trifluoromethyl)benzoic acid (2.6 mg, $1.4 \times 10^{-2}$ mmol) and TEOA (43.1 mg, 0.29 mmol) were added to 4 mL of heavy water to prepare a standard solution (NMR standard solution).
The PFOS + nanoparticle preparation solution and the NMR standard solution were taken in an amount of 0.4 mL and 0.1 mL, respectively, and transferred to an NMR sample tube to perform $^{19}$FNMR measurement (0 h).
The PFOS + nanoparticle preparation solution was transferred to a 1-cm cell and irradiated with UV light (365 nm, 550 mW/1.44 cm2) for 6 hours and 24 hours. This PFOS + nanoparticle preparation solution and the NMR standard solution were taken in an amount of 0.4 mL and 0.1 mL, respectively, and transferred to an NMR sample tube to perform $^{19}$FNMR measurement (6 h and 24 h). FIG. 9 shows the results of measuring $^{19}$FNMR before the UV light irradiation (0 h) and after the UV light irradiation (6 h and 24 h). As a result of calculating the C-F bond dissociation rate from the integral value of fluoride ion using the peak integral value at 0 has a reference value, the C-F bond dissociation rate was found to be 36% at 6 h and 68% at 24 h.

Comparative Example 1: Synthesis of 3-Mercaptopropionic Acid (MPA)-Coordinated Cu-Doped ZnS Nanocrystal and Decomposition of PFOS

(Synthesis)

In a 200-mL three-necked flask, zinc acetate dihydrate ($Zn(CH_3COO)_2 \cdot 2H_2O$, 547 mg, 2.5 mmol) and copper (II) acetylacetonate ($Cu(C_5H_7O_2)_2$, 6.6 mg, 0.026 mmol) were placed and dissolved in 100 mL of Milli-Q water, and 3-mercaptopropionic acid (MPA, 1 mL) was added thereto with stirring, after which the pH was adjusted to 12.1 with sodium hydroxide, followed by 30-minute nitrogen bubbling. Sodium sulfide ($Na_2S$, 283 mg, 1.18 mmol) dissolved in 2.5 mL of Milli-Q water was added with vigorous stirring, and the resultant was continuously stirred for 15 minutes and subsequently heated to reflux at 100°C for 24 hours. The thus obtained solution was precipitated with ethanol (solution:ethanol = 4:1) and then centrifuged (9,000 rpm, 10 minutes), and the resulting precipitate was vacuum-dried at 40°C.

(Structural Identification)

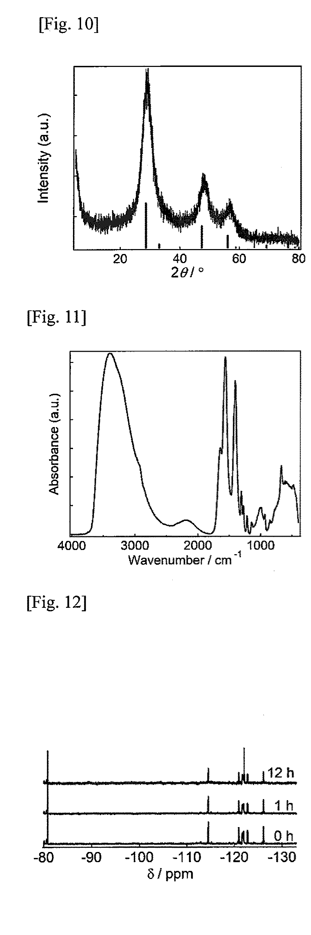

FIG. 10 shows the powder X-ray diffraction (XRD) measurement result of the thus synthesized MPA-coordinated Cu-doped ZnS nanocrystal. The synthesized nanocrystal was found to exhibit a zinc blende-type crystal structure (JCPDS: 01-073-2568). The particle diameter of the MPA-coordinated Cu-doped ZnS nanocrystal of Comparative Example 1 was calculated to be 3.51 nm by the same method as in Example 1.

X-ray fluorescence (XRF) measurement of the nanocrystal of Comparative

Example 1 was performed. It was found that, in a sample of the nanocrystal of Comparative Example 1, 1.1% by mole of Cu existed in terms of mole ratio with respect to Zn.

The FTIR absorption spectrum of the nanocrystal of Comparative Example 1 was measured. The result thereof is shown in FIG. 11. Symmetric and asymmetric stretching vibrations of $COO^-$ were observed at 1,565 $cm^{-1}$ and 1,404 $cm^{-1}$. The broad band from 3,000 to 3,600 $cm^{-1}$, which is derived from O-H stretching vibration, suggests hydrogen bonding between carboxyl groups and adsorbed water that exist on the nanocrystal surface. From the FTIR spectrum, it was suggested that MPA was coordinated to the nanocrystal surface.

(Photolysis Reaction of PFOS).

The photolysis reaction of PFOS was measured in the same manner as in Example 1, except that the nanocrystal of Comparative Example 1 was used. FIG. 12 shows the results of measuring $^{19}$FNMR before the UV light irradiation (0 h) and after the UV light irradiation (1 h and 12 h). As a result of calculating the C-F bond dissociation rate (not the PFOS decomposition rate but the C-F bond dissociation rate) from the integral value of fluoride ion using the peak integral value at 0 h as a reference value, the C-F bond dissociation rate was found to be 0.2% at 1 h and 16% at 12 h.

Comparative Example 2: Synthesis of MPA-Coordinated ZnS Nanocrystal and Decomposition of PFOS

(Synthesis)

In a 500-mL three-necked flask, zinc acetate dihydrate ($Zn(CH_3COO)_2 \cdot 2H_2O$, 551.9 mg, 2.5 mmol) was placed and dissolved in 100 mL of Milli-Q water.
To the resulting solution, 3-mercaptopropionic acid (MPA, 1 mL) was added with stirring, and the pH was adjusted to 12.0 with sodium hydroxide, followed by 30-minute nitrogen bubbling. Sodium sulfide ($Na_2S$, 290.9 mg, 1.21 mmol) dissolved in 2.5 mL of Milli-Q water was added with vigorous stirring, and the resultant was continuously stirred for 15 minutes and subsequently heated to reflux at 100°C for 24 hours. The thus obtained solution was precipitated with ethanol (solution:ethanol = 4:1) and then centrifuged (9,000 rpm, 10 minutes), and the resulting precipitate was vacuum-dried at 40°C.

(Structural Identification)

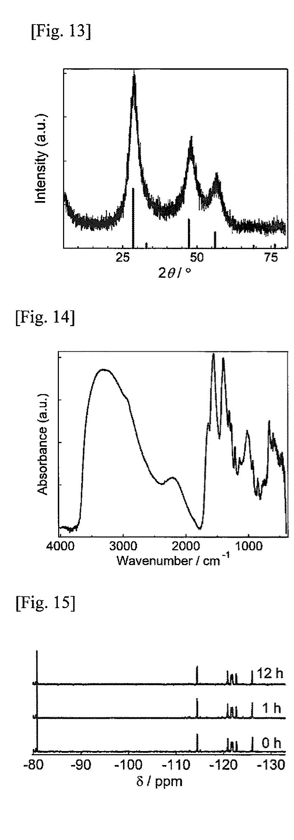

FIG. 13 shows the powder X-ray diffraction (XRD) measurement result of the thus synthesized MPA-coordinated ZnS nanocrystal of Comparative Example 2. The synthesized nanocrystal was found to exhibit a zinc blende-type crystal structure (JCPDS: 01-073-2568).
The particle diameter of the MPA-coordinated ZnS nanocrystal of Comparative Example 2 was calculated to be 3.61 nm by the same method as in Example 1.
X-ray fluorescence (XRF) measurement of the MPA-coordinated ZnS nanocrystal of Comparative Example 2 was performed in the same manner as in Example 1. In the nanocrystal of Comparative Example 2, Cu was not detected.
The FTIR absorption spectrum of the MPA-coordinated ZnS nanocrystal of Comparative Example 2 was measured in the same manner as in Example 1. The result thereof is shown in FIG. 14. Symmetric and asymmetric stretching vibrations of $COO^-$ were observed at 1,557 $cm^{-1}$ and 1,403 $cm^{-1}$. In addition, the broad band from 3,000 to 3,600 $cm^{-1}$, which is derived from O-H stretching vibration, suggests hydrogen bonding between carboxyl groups and adsorbed water that exist on the nanocrystal surface. From the FTIR spectrum, it was suggested that MPA was coordinated to the nanocrystal surface.

(Photolysis Reaction of PFOS)

The $^{19}$FNMR of the MPA-coordinated ZnS nanoparticle of Comparative Example 2 was measured before UV light irradiation (0 h) and after UV light irradiation (1 h and 12 h) in the same manner as in Example 1. The results thereof are shown in FIG. 15. As a result of calculating the C-F bond dissociation rate (not the PFOS decomposition rate but the C-F bond dissociation rate) from the integral value of fluoride ion using the peak integral value at 0 h as a reference value, the C-F bond dissociation rate was found to be 0.3% at 1 h and 0.4% at 12 h.

Comparative Example 3: Synthesis of MPA-Coordinated ZnO Nanocrystal and Decomposition of PFOS

(Synthesis)

In a 200-mL three-necked flask, zinc acetate dihydrate (1,507 mg, 6.87 mmol) was placed and dissolved in 68 mL of methanol, followed by refluxing at 60°C with stirring. Subsequently, a KOH methanol solution (772.7 mg, 13.8 mmol/33 mL) was added over a period of 7 minutes, and the resulting solution was stirred for 2 hours. Thereafter, heating and stirring were stopped, and the solution was left to stand for 3 hours and then centrifuged (6,000 rpm, 3 minutes). The thus synthesized ZnO nanocrystal was dissolved in a small amount of chloroform. An aqueous solution of MPA that had been adjusted to have a pH of 11 with 2M NaOHaq was added thereto (MPA, 545.4 mg), and the resultant was ultrasonically stirred for about 5 minutes. Then, only the aqueous portion was taken out, and ethanol was added thereto, followed by centrifugation (9,000 rpm, 5 minutes). The resulting precipitate was washed five times (9,000 rpm, 5 minutes) using acetone as a poor solvent, and then vacuum-dried for one day.

(Structural Identification)

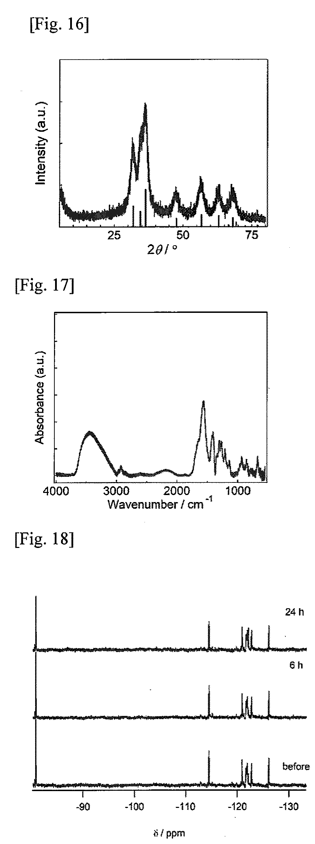

FIG. 16 shows the powder X-ray diffraction (XRD) measurement result of the thus synthesized MPA-coordinated ZnO nanocrystal of Comparative Example 3. The synthesized nanocrystal was found to be a wurtzite-type crystal. Using the Scherrer formula for the peak at 47°, the particle size of the ZnO nanocrystal was calculated to be 5.25 nm.

FIG. 17 shows the FTIR measurement result of the nanocrystal of Comparative Example 3. From FIG. 17, C-H stretching vibration is observed at 2,920 and 2,850 cm$^{-1}$, and symmetric and asymmetric stretching vibrations of COO$^-$ are observed at 1,580 and 1,370 cm$^{-1}$. Because of the absence of the S-H stretching vibration of MPA observed at 2,560 cm$^{-1}$, it is believed that MPA is deprotonated and coordinated to the surface of the ZnO nanocrystal. In addition, since the ZnO nanocrystal dissolves in water, it is believed that MPA is coordinated.

(Photolysis Reaction of PFOS)

The MPA-coordinated ZnO nanocrystal of Comparative Example 3 was weighed in 11.6 mg and added to 4 mL of heavy water. To the resulting solution, triethanolamine (TEOA, 65.2 mg, 0.44 mmol) and PFOS (1.8 mg, $3.3 \times 10^{-3}$ mmol) were added to prepare a solution (PFOS + nanoparticle preparation solution).

As NMR standard substances, 4-(trifluoromethyl)benzoic acid (2.5 mg, $1.3 \times 10^{-2}$ mmol) and TEOA (52.0 mg, 0.35 mmol) were added to 4 mL of heavy water to prepare a standard solution (NMR standard solution).

The PFOS + nanoparticle preparation solution and the NMR standard solution were taken in an amount of 0.4 mL and 0.1 mL, respectively, and transferred to an NMR sample tube to perform $^{19}$FNMR measurement (0 h).

The PFOS + nanoparticle preparation solution was transferred to a 1-cm cell and irradiated with UV light (365 nm, 550 mW/1.44 cm$^2$) for 6 hours and 24 hours. This PFOS + nanoparticle preparation solution and the NMR standard solution were taken in an amount of 0.4 mL and 0.1 mL, respectively, and transferred to an NMR sample tube to perform $^{19}$FNMR measurement (6 h and 24 h). FIG. 18 shows the results of measuring $^{19}$FNMR before the UV light irradiation (0 h) and after the UV light irradiation (6 h and 24 h). As a result of calculating the C-F bond dissociation rate from the integral value of fluoride ion using the peak integral value at 0 h as a reference value, the C-F bond dissociation rate was found to be 0% at 6 h and 6.1% at 24 h.

Comparing the results of photolysis reaction between Example 1 and Comparative Example 1, Example 2 and Comparative Example 2, and Example 3 and Comparative Example 3, those of Examples were superior.

Example 4: Synthesis of Acetic Acid (AA)-Coordinated ZnS Nanocrystal and Decomposition of PFOS

(Synthesis)

In a 100-mL two-necked flask, zinc acetate dihydrate ($Zn(CH_3COO)_2 \cdot 2H_2O$, 1,097 mg, 5.00 mmol) was added to and dissolved in 20 mL of Milli-Q water and, in a 100-mL Schlenk flask, sodium sulfide nonahydrate ($Na_2S \cdot 9H_2O$, 1,206.9 mg, 5.02 mmol) was added to and dissolved in 20 mL of Milli-Q water, after which the resulting aqueous solutions were each bubbled with nitrogen for 15 minutes. These flasks were connected via a TYGON tube, and nitrogen gas was passed through the Schlenk flask to increase the internal pressure, thereby adding the aqueous solution in the Schlenk flask to the two-necked flask at a rate of 0.1 mL/s under a nitrogen atmosphere. The solution in the two-necked flask became cloudy immediately after this dropwise addition. Thereafter, the solution was stirred for 30 minutes, and the resulting reaction solution was transferred to a centrifuge tube, after which an operation of adding Milli-Q water thereto and performing centrifugation (9,000 rpm, 8 minutes) was performed twice, and the thus precipitated white solid was washed and vacuum-dried overnight, whereby a nanocrystal of Example 4 was obtained.

(Photolysis Reaction)

Preparation of Solution:

Potassium perfluorooctanesulfonate (PFOS, 11.79 mg, 22 $\mu$mol) and triethanolamine ($N(CH_2CH_2OH)_3$, 525.4 mg, 3.5 mmol) were dissolved in Milli-Q water (10 mL) to prepare a PFOS solution. To 1 mL of this solution, 5.12 mg of acetic acid-coordinated ZnS nanocrystal was added to prepare a PFOS-nanocrystal preparation solution of Example 4.

Decomposition Reaction:

The thus obtained PFOS-nanocrystal preparation solution of Example 4 in an amount of 1 mL was put into a 1-cm cell, bubbled with nitrogen for 30 minutes, and then irradiated with UV light (365 nm, 690 mW/0.069 cm$^2$) at 23°C for 12 hours. This PFOS-nanocrystal preparation solution was centrifuged (15,000 rpm, 3 minutes) and then filtered through a membrane filter, after which the resulting filtrate was diluted 50-fold. The fluorine ion concentration in the solution was determined by performing ion chromatography. The C-F bond dissociation rate (not the decomposition rate of PFOS) was calculated from the peak area of fluoride ion observed at a retention time of 3.6 minutes in the ion chromatography, and the result thereof is shown in Table 1.

Synthesis of Examples 5 to 9

Nanocrystals of Examples 5 to 9 shown in Table 1 were obtained in the same manner as in Example 4 (Synthesis) using raw materials corresponding to the raw materials used in Example 4.

Example 10: Synthesis of Trifluoromethanesulfinate (TFMS)-Coordinated ZnO Nanocrystal

In a 200-mL two-necked flask, zinc (II) trifluoromethanesulfinate (1,539 mg, 4.64 mmol) was dissolved in 45 mL of methanol, followed by refluxing at 60°C with stirring. Subsequently, a KOH methanol solution (504 mg/22 mL, 8.99 mmol) was added over a period of 6 minutes and 40 seconds, and the resulting solution was stirred for 2 hours. After the addition of KOH, the solution became cloudy and remained cloudy for 2 hours. This solution was centrifuged at 6,000 rpm for 5 minutes and then vacuum-dried overnight, whereby a nanocrystal of Example 10 was obtained.

Synthesis of Examples 11 to 13

Nanoparticles of Examples 11 to 13 shown in Table 1 were obtained in the same manner as in Example 10 (Synthesis) using raw materials corresponding to the raw materials used in Example 10.

Photolysis Reaction of PFOS Using Nanocrystals of Examples 5 to 13

Using each of the nanocrystals of Examples 5 to 13, photolysis reaction of PFOS was performed in the same manner as in Example 4 (Photolysis Reaction). It is noted here, however, that the light irradiation was performed for 12 hours when the nanocrystals of Examples 5 to 9 were used, and the light irradiation was performed for 4 hours when the nanocrystals of Examples 10 to 13 were used. The C-F bond dissociation rate was calculated in the same manner as in Example 4, and the results thereof are shown in Table 1.

The C-F bond dissociation rates and the XRD and FT-IR measurement results of the nanocrystals of Examples 4 to 13 are shown in Table 1.

[Table 1]

| Example | Nanocrystal/Particle size (nm) | C-F bond dissociation rate/Irradiation time | XRD peak representative value (2θ)/ FT-IR peak representative value (cm$^{-1}$) |
|---|---|---|---|
| 4 | Acetic acid (AA)-coordinated ZnS/2.69 nm | 30.1%/12 hr | 28.6, 47.6, 56.5°/ 1,560, 1,420 cm$^{-1}$ |
| 5 | Glycine (Gly)-coordinated ZnS/3.08 nm | 16.6%/12 hr | 28.6, 47.6, 56.5°/ 1,570, 1,410 cm$^{-1}$ |
| 6 | Trifluoromethanesulfonic acid (TFMS)-coordinated ZnS/2.79 nm | 18.3%/12 hr | 28.6, 56.5°/ 1,620, 1560, 1,400 cm$^{-1}$ |
| 7 | Diethyldithiocarbamic acid (DED-CA)-coordinated ZnS/3.17 nm | 39.8%/12 hr | 28.6, 47.6, 56.5°/ 1,500, 1,420, 1,270 cm$^{-1}$ |
| 8 | Benzoic acid (BA)-coordinated ZnS/2.95 nm | 15.3%/12 hr | 28.6, 47.6, 56.51 1,630, 1,460, 1,360 cm$^{-1}$ |
| 9 | Propionic acid (PA)-coordinated ZnS/3.78 nm | 13.1%/12 hr | 28.6, 47.6, 56.5°/ 1,630, 1,460, 1,370 cm$^{-1}$ |
| 10 | Trifluoromethanesulfonic acid (TFMS)-coordinated ZnO/2.97 nm | 19.0%/4 hr | 34.9, 46.5, 56.1, 62.2, 67.4°/ 1,621, 1,495, 1,247, 1,176, 1,031, 647 cm$^{-1}$ |
| 11 | Benzoic acid-coordinated ZnO/2.95 nm | 26.6%/4 hr | 32.6, 35.2, 47.3, 56.5, 61.8, 67.4°/ 1,598, 1,551, 1,407, 717 cm$^{-1}$ |
| 12 | Propionic acid-coordinated Zn0/4.07 nm | 33.4%/4 hr | 31.8, 34.5, 36.3, 47.5, 56.6, 62.8, 68.0°/ 1,568, 1,413, 1,286, 1,077 cm$^{-1}$ |
| 13 | Glycine-coordinated ZnO/4.87 nm | 26.7%/4 hr | 31.7, 36.2, 47.5, 56.6, 62.4, 68.0°/ 1,596, 1,485, 1,398 cm$^{-1}$ |

Example 14: Synthesis of Propionic Acid-Coordinated Cu-Doped ZnO Nanocrystal and Decomposition of PFOS

In a 100-mL three-necked flask, 540 mg of zinc propionate and 6.85 mg of $CuCl_2$ were dissolved in 21 mL of methanol, followed by refluxing at 60°C with stirring. Subsequently, a KOH methanol solution (292 mg/12 mL) was added over a period of 5 minutes and 53 seconds, and the resulting solution was stirred for 2 hours. This solution was centrifuged at 9,000 rpm for 5 minutes and then dried overnight under reduced pressure, whereby a nanocrystal of Example 14 was obtained.

From XRD of the nanocrystal of Example 14, this nanocrystal was found to be a wurtzite-type crystal. Using the Scherrer formula for the peak at 47°, the particle size of the nanocrystal of Example 14 was calculated to be 4.13 nm.

Further, based on XRF, the Cu doping rate calculated from the ratio of Cu with respect to Zn was 1.96%.

(Photolysis Reaction)

Preparation of Solution:

The propionic acid-coordinated Cu-doped ZnO nanocrystal of Example 14 was weighed in 5.12 mg and added to 1 mL of Milli-Q water. To the resulting solution, TEOA (12.0 mg, 0.08 mmol) and PFOS (0.66 mg, $1.2 \times 10^{-3}$ mmol) were added to obtain a PFOS-nanoparticle preparation solution of Example 14.

Decomposition Reaction:

The PFOS-nanoparticle preparation solution was transferred to a 1-cm cell and irradiated with UV light (365 nm, 680 mW) for 4 hours. This PFOS-nanoparticle preparation solution was centrifuged, and the resulting supernatant was 40-fold diluted. The fluorine ion concentration in the solution was determined by performing ion chromatography. The C-F bond dissociation rate was calculated from the thus determined fluorine ion concentration to be 9.0% at 4 h.

INDUSTRIAL APPLICABILITY

The nanoparticle according to one embodiment of the present invention comprises no rare metal such as iridium, and is not only lower in cost but also superior in sustainability (lower in country risk). The use of this specific nanoparticle enables to generate hydrated electrons and decompose a fluorine-containing organic material using a lower energy, smaller, and less expensive light source. The nanoparticle according to one embodiment of the present invention can be utilized as a photochromic material and has excellent versatility as well.

[Related Application]

This patent application claims priority under Article 4 of the Paris Convention or Article 41 of the Japan Patent Act based on Japanese Patent Application No. 2023-17879 filed in Japan on February 8, 2023, the entirety of which is incorporated herein by reference.

**Claims**

1. A nanoparticle, comprising an organic ligand represented by the following Formula (2) on the surface of a particle represented by the following Formula (1):

   $$ZnX \qquad (1)$$

   [in Formula (1), X represents a Group 16 element]

   $$-Y-R^{21}-R^{22} \qquad (2)$$

   [in Formula (2), Y is selected from OCO, $OSO_2$, OSO, and SCS-N($R^{23}$); $R^{21}$ represents an organic group having 1 to 20 carbon atoms that is optionally substituted with SH or fluorine; $R^{22}$ represents H, F, COOH, or $NH_2$; and $R^{23}$ represents a monovalent organic group having 1 to 20 carbon atoms that is optionally substituted with SH or fluorine, with the proviso that cases where $R^{21}$ is $CH_2$ and $R^{22}$ is H or $NH_2$ are excluded].

2. The nanoparticle according to claim 1, wherein Formula (2) is selected from the following:

   $$-OCO-CH(CH_3)-NH_2,$$

   $$-OCO-CH(CH_2SH)-NH_2,$$

   $$-OCO-C_6H_5,$$

   $$-OCO-C_2H_5,$$

   $$-OCO-CF_3,$$

   $$-OSO_2-CF_3,$$

   $$-OSO-CF_3,$$

   and

   $$-SCS-N(C_2H_5)_2.$$

3. A nanoparticle for a photochromic material, generation of hydrated electrons, or decomposition of a halogen-containing organic material, the nanoparticle comprising a nanoparticle that comprises an organic ligand represented by the following Formula (2') on the surface of a particle represented by the following Formula (1'):

   $$ZnX \qquad (1')$$

[in Formula (1'), X represents a Group 16 element]

$$- Y\text{-}R^{21}\text{-}R^{22} \qquad (2')$$

[in Formula (2'), Y is selected from OCO, $OSO_2$, OSO, and SCS-N($R^{23}$); $R^{21}$ represents an organic group having 1 to 20 carbon atoms that is optionally substituted with SH or fluorine; $R^{22}$ represents H, F, COOH, or $NH_2$; and $R^{23}$ represents a monovalent organic group having 1 to 20 carbon atoms that is optionally substituted with SH or fluorine].

4. The nanoparticle according to claim 3, wherein Formula (2) is selected from the following:

$-OCO\text{-}CH_3$,

$-OCO\text{-}CH_2\text{-}NH_2$,

$-OCO\text{-}CH(CH_3)\text{-}NH_2$,

$-OCO\text{-}CH(CH_2SH)\text{-}NH_2$,

$-OCO\text{-}C_6H_5$,

$-OCO\text{-}C_2H_5$,

$-OCO\text{-}CF_3$,

$-OSO_2\text{-}CF_3$,

$-OSO\text{-}CF_3$,

and

$-SCS\text{-}N(C_2H_5)_2$.

5. The nanoparticle according to claim 1, wherein $R^{21}$ represents a divalent organic group having 1 to 20 carbon atoms that is optionally substituted with SH or fluorine, and $R^{22}$ is H or COOH, with the proviso that cases where $R^{21}$ is $CH_2$ and $R^{22}$ is H are excluded.

6. The nanoparticle according to claim 3, wherein $R^{21}$ represents a divalent organic group having 1 to 20 carbon atoms that is optionally substituted with SH or fluorine, and $R^{22}$ is H or COOH.

7. The nanoparticle according to claim 1 or 3, wherein X is at least one selected from O, S, Se, and Te.

8. The nanoparticle according to claim 1 or 3, having an average particle size of 1 nm to 100 nm.

9. A nanoparticle for a photochromic material, generation of hydrated electrons, or decomposition of a halogen-containing organic material, the nanoparticle comprising the nanoparticle according to claim 1.

10. A nanoparticle aqueous dispersion, comprising the nanoparticle according to claim 1 or 3 dispersed in water.

11. A method for generating hydrated electrons, the method using the nanoparticle for generation of hydrated electrons according to claim 3 or 9.

12. The method for generating hydrated electrons according to claim 11, the method comprising irradiating the nanoparticle for generation of hydrated electrons according to claim 3 or 9 with visible light or UV light.

13. A method for decomposing a halogen-containing organic material, the method using the nanoparticle for decomposition of a halogen-containing organic material according to claim 3 or 9.

14. The method for decomposing a halogen-containing organic material according to claim 13, the method comprising irradiating the nanoparticle for decomposition of a halogen-containing organic material according to claim 3 or 9 with visible light or UV light to cleave halogen-carbon bonds of the halogen-containing organic material.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

[Fig. 14]

[Fig. 15]

[Fig. 16]

[Fig. 17]

[Fig. 18]

## INTERNATIONAL SEARCH REPORT

| | International application No. |
|---|---|
| | **PCT/JP2024/004149** |

**A. CLASSIFICATION OF SUBJECT MATTER**

*C01G 9/08*(2006.01)i; *B82Y 30/00*(2011.01)i; *C01G 9/02*(2006.01)i; *C09K 9/00*(2006.01)i
FI:   C01G9/08; C01G9/02 A; C09K9/00 D; B82Y30/00

According to International Patent Classification (IPC) or to both national classification and IPC

**B. FIELDS SEARCHED**

Minimum documentation searched (classification system followed by classification symbols)

C01G9/08; B82Y30/00; C01G9/02; C09K9/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-212548 A (SHIMANE UNIV.) 17 October 2013 (2013-10-17) paragraphs [0010]-[0012], [0017], [0021]-[0030], [0047]-[0050], [0051]-[0054], [0056] | 1, 3, 7-10 |
| A | entire text, all drawings | 2, 4-6, 11-14 |
| A | JP 2005-217385 A (NATIONAL INSTITUTE FOR MATERIALS SCIENCE) 11 August 2005 (2005-08-11) paragraphs [0035], [0043] | 1-14 |
| A | JP 2004-002176 A (NIPPON SHEET GLASS CO., LTD.) 08 January 2004 (2004-01-08) entire text, all drawings | 1-14 |
| A | JP 7-232919 A (NIPPON SHOKUBAI CO., LTD.) 05 September 1995 (1995-09-05) entire text, all drawings | 1-14 |
| A | WO 2020/175245 A1 (THE RITSUMEIKAN TRUST) 03 September 2020 (2020-09-03) entire text, all drawings | 1-14 |

☑ Further documents are listed in the continuation of Box C.     ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **10 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/004149** |

### C. DOCUMENTS CONSIDERED TO BE RELEVANT

| Category* | Citation of document, with indication, where appropriate, of the relevant passages | Relevant to claim No. |
|---|---|---|
| A | CN 103215029 A (JIANGSU HUATIANTONG TECHNOLOGY CO., LTD.) 24 July 2013 (2013-07-24) entire text, all drawings | 1-14 |

Form PCT/ISA/210 (second sheet) (July 2022)

## INTERNATIONAL SEARCH REPORT
### Information on patent family members

International application No.

**PCT/JP2024/004149**

| Patent document cited in search report | | | Publication date (day/month/year) | Patent family member(s) | Publication date (day/month/year) |
|---|---|---|---|---|---|
| JP | 2013-212548 | A | 17 October 2013 | (Family: none) | |
| JP | 2005-217385 | A | 11 August 2005 | (Family: none) | |
| JP | 2004-002176 | A | 08 January 2004 | (Family: none) | |
| JP | 7-232919 | A | 05 September 1995 | (Family: none) | |
| WO | 2020/175245 | A1 | 03 September 2020 | US 2022/0162085 A1<br>entire text, all drawings | |
| CN | 103215029 | A | 24 July 2013 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020175245 A

- JP 2023017879 A

**Non-patent literature cited in the description**

- *Chem. Rev.*, 2012, vol. 112, 5553-5577

- *J. Am. Chem. Soc.*, 2019, vol. 141 (5), 2122-2127